# EUROPEAN PATENT SPECIFICATION

(11) **EP 4 389 410 B1**
(45) Date of publication and mention of the grant of the patent: **17.06.2026**
(21) Application number: 23217285.8
(22) Date of filing: 15.12.2023
(51) Int. Cl.: B32B 1/00, B32B 7/02, B32B 7/022, B32B 7/12, B32B 15/08, B32B 15/20, B32B 27/28, B32B 27/30, B32B 27/32, B32B 27/34, B32B 27/36, H01M 4/00, H01M 10/00, H01M 50/00

(54) **POUCH FOR SECONDARY BATTERY AND LITHIUM SECONDARY BATTERY COMPRISING THE SAME**
BEUTEL FÜR SEKUNDÄRBATTERIE UND LITHIUMSEKUNDÄRBATTERIE DAMIT
POCHE POUR BATTERIE SECONDAIRE ET BATTERIE SECONDAIRE AU LITHIUM LA COMPRENANT

(30) Priority: 23.12.2022 KR 20220183748
(43) Date of publication of application: 26.06.2024
(60) Divisional application: 25218895.8
(73) Proprietor: LG Energy Solution, Ltd., Seoul 07335 (KR)
(72) Inventor: YUN, Min Hyuk, 34122 Daejeon (KR); KIM, Duck Hoe, 34122 Daejeon (KR); BAEK, In Yong, 34122 Daejeon (KR); HWANG, Ji Young, 34122 Daejeon (KR); PARK, Jeong Hyeon, 34122 Daejeon (KR); JANG, Wan Gyeong, 34122 Daejeon (KR); SONG, Dae Woong, 34122 Daejeon (KR); KIM, Moo Yeon, 34122 Daejeon (KR)
(74) Representative: Goddar, Heinz J.

(56) References cited:
- JP-A- 2002 319 376
- JP-A- 2014 063 587
- JP-A- 2022 077 214
- JP-B2- 6 015 066
- US-B2- 11 128 004

## Description

### BACKGROUND OF THE INVENTION

### Field of the Invention

The present invention relates to a pouch for a secondary battery and a lithium secondary battery including the same, and more particularly, to a pouch for a secondary battery, which has high cell vent resistance and low vent generation to implement excellent high-temperature reliability, and a lithium secondary battery including the same.

### Description of the Related Art

A lithium secondary battery is manufactured in a manner in which, electrode active material slurry is applied to a positive electrode collector and a negative electrode collector to manufacture a positive electrode and a negative electrode, and the positive electrode and the negative electrode are stacked on both sides of a separator to form an electrode assembly, and then, the electrode assembly is accommodated in a pouch, and an electrolyte is injected into the case.

Such a secondary battery is classified into a pouch-type secondary battery and a can-type secondary battery according to a material of a case accommodating the electrode assembly. Among them, the pouch-type secondary battery is manufactured in a manner, in which press processing is performed on a flexible pouch film stack to form a cup part, and an electrode assembly is accommodated in the cup part, and then, an electrolyte is injected, and a sealing part is sealed. The can-type secondary battery is manufactured in a manner, in which an electrode assembly is accommodated in a can made of a metal material, an electrolyte is injected, and a top cap is assembled with an upper portion of the can so as to be sealed.

While pouch-type secondary batteries are light weight, exhibit excellent space utilization, and have high energy densities, due to their stacked electrode assemblies, pouch-type secondary batteries are more vulnerable to fire, explosion, and electrolyte leakage upon external impact and/or high internal temperatures or pressure compared to can-type secondary batteries. When secondary batteries are used to power electric vehicles, the batteries are required to have excellent safety to protect the vehicle's passengers

In addition, when the pouch-type secondary battery is stored at a high temperature, a gas is generated due to a side reaction with the electrolyte, and as a result, an internal pressure of the battery increases, resulting in a vent phenomenon in which a sealing part of the pouch bursts. If the vent phenomenon occurs early, safety and reliability of the secondary battery are greatly deteriorated. Therefore, there is a need to develop a pouch-type secondary battery having high cell vent resistance and low vent generation in a high-temperature environment to implement excellent high-temperature reliability.

JP6015066 discloses a battery packaging material consisting of a laminate formed by sequentially laminating at least a base material layer, a metal layer, an adhesive resin layer, and a sealant layer, the adhesive resin layer contains a carboxylic-acid modified polyolefin, and the sealant layer contains a cycloolefin copolymer consisting of a copolymer of ethylene and norbornene.

US11128004 discloses an exterior material for a lithium ion battery comprising at least a substrate layer, a metal foil layer, and a sealant layer in that order, wherein the sealant layer comprises an anionic functional group-containing layer containing a compound having an anionic functional group, and the concentration of the anionic functional group contained in the anionic functional group-containing layer is about 1.0 mass % or more based on the total amount of the components constituting the anionic functional group-containing layer.

JP2022077214 discloses a content resistance laminate with a base material layer, a gas barrier layer, an adhesive layer, and a sealant layer laminated in this order from a surface layer, in which the adhesive layer is melted and co-extruded such that acid-modified polyethylene is arranged on the gas barrier layer side and low-density polyethylene is arranged on the sealant layer side, the gas barrier layer and the sealant layer are sandwich-laminated, the sealant layer is made of a liquid repellent film including a liquid repellent layer, and the acid-modified polyethylene is made of maleic anhydride graft polymerization polyethylene.

JP2002319376 discloses a packaging material for forming the outer packaging body for a battery for inserting the battery main body to seal its peripheral edge part by the heat seal consists of a packaging material comprising a layered body constituted of at least a base material layer, an adhesive layer, aluminum, a formation treated layer, a further adhesive layer, and a multilayered sealant layer which is co-extruded a polyolefin and an acid-modified polyolefin to form a film and which is cross-linked to be brought into 0.5%-80% of gel fraction.

### SUMMARY OF THE INVENTION

An aspect of the present invention provides a pouch having a specific melt flow rate, including a sealant layer having a two-layer structure, having high cell vent resistance, and having excellent high-temperature reliability, and a lithium secondary battery including the same.

According to an aspect of the present invention, there is provided a pouch for a secondary batter including: a barrier layer configured to secure mechanical strength of the pouch, block introduction and discharge of a gas or moisture outside the secondary battery, and prevent the electrolyte from leaking; a base material layer disposed on one surface of the barrier layer; and a sealant layer disposed on the other surface of the barrier layer, wherein the sealant layer includes: a first sealant layer in contact with the other surface of the barrier layer; and a second sealant layer disposed on the first sealant layer opposite to the barrier layer, wherein the sealant layer has a melt flow rate (MFR) of from 8.5 g/10 min to 14.0 g/10 min, which is measured at a temperature of about 230°C under a load condition of about 2.16 kg; a ratio of a thickness of the second sealant layer to a thickness of the first sealant layer ranges between 0.8 and 1.2; the first sealant layer has a thickness of 25 µm to 80 µm; the second sealant layer has a thickness of 20 µm to 80 µm; and a total thickness of the sealant layer ranges between 45 µm and 100 µm.

The first sealant layer and the second sealant layer may be formed on the barrier layer through co-extrusion, the first sealant layer may include an acid-modified polyolefin resin, and the second sealant layer may include a polyolefin resin.

A thickness ratio of the second sealant layer to the thickness of the first sealant layer is about 0.8 to about 1.2, preferably about 0.9 to about 1.1. the first sealant layer has a thickness of about 25 µm to about 80 µm, preferably about 30 µm to about 70 µm, more preferably about 30 µm to about 60 µm, and the second sealant layer may have a thickness of about 20 µm to about 80 µm, preferably about 25 µm to about 70 µm, more preferably about 30 µm to about 60 µm.

The total thickness of the sealant layer combining the first sealant layer and the second sealant layer is about 45 µm to about 100 µm, preferably about 50 µm to about 100 µm, more preferably about 60 µm to about 100 µm, and even more preferably about 70 µm to about 90 µm.

The barrier layer may include an aluminum alloy layer.

The base material layer may include at least one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazoles, polyarylates, and Teflon.

According to another aspect of the present invention, there is provided a lithium secondary battery including: an electrode assembly, in which a positive electrode, a separator, and a negative electrode are stacked; an electrolyte; and a pouch-type battery case configured to accommodate the electrode assembly and the electrolyte, wherein the battery case is the above-described pouch according to the present invention.

In the lithium secondary battery, cell vent resistance may be about 7.7 bars or more, preferably about 7.7 bars to 15 bars, and more preferably about 8 bars to about 15 bars at a temperature of about 60°C.

An accelerated high-temperature storage period, which is measured by charging the lithium secondary battery up to SOC 100% at a temperature of about 70°C for 1-day intervals, may be about 15 days or more, preferably about 15 days to about 30 days, more preferably about 15 days to about 25 days.

According to yet another aspect of the present disclosure, a method of forming a pouch for a secondary battery, includes the steps of: stacking a base material layer on a first surface of a barrier layer; and co-extruding a sealant layer, including a first sealant layer and a second sealant layer, on a second surface of the barrier layer, wherein the sealant layer has a melt flow rate (MFR) from 8.5 g/10 min to 14.0 g/10 min, which is measured at a temperature of about 230°C under a load condition of about 2.16 kg; a ratio of a thickness of the second sealant layer to a thickness of the first sealant layer ranges between 0.8 and 1.2; the first sealant layer has a thickness of 25 µm to 80 µm; the second sealant layer has a thickness of 20 µm to 80 µm; and a total thickness of the sealant layer ranges between 45 µm and 100 µm.

After the co-extruding step, the first sealant layer is in direct contact with the barrier layer, and the second sealant layer is stacked on a surface of the first sealant layer.

The first sealant layer may include an acid-modified polyolefin resin, and the second sealant layer may include a polyolefin resin.

The resin pressure may be controlled, using a co-extrusion device, during the co-extruding step , wherein the resin pressure is applied to a filter of the co-extrusion device; and the resin pressure is controlled so that the melt flow rate of the entire sealant layer is controlled to be from 8.5 g/10 min to 14.0 g/10 min.

The co-extruding step may include replacing a filter of the co-extrusion device when the resin pressure exceeds a predetermined value to control the resin pressure.

The sealant layer is co-extruded to have thickness in a range of about 45 µm to about 100 µm, such that, the first sealant layer may have a thickness of about 25 µm to about 80 µm, and the second sealant layer may have a thickness of about 20 µm to about 80 µm.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a cross-sectional view of a pouch film stack according to an embodiment of the present invention.
FIG. 2 is an exploded perspective view of a secondary battery according to another embodiment of the present invention.
FIG. 3 is a graph showing results obtained by measuring cell vent resistance and an accelerated high-temperature storage period according to Embodiment and Comparative Example.

### DETAILED DESCRIPTION OF THE PREFERRED EMBODIMENT

Hereinafter, the present invention will be described in more detail.

As a result of repeated research to develop a pouch-type secondary battery having excellent high-temperature reliability, the present inventors found that when a melt flow index of a sealant layer of a pouch satisfies a specific range, resistance of the sealant layer against a pressure inside a cell (cell vent resistance) is significantly improved to suppress an occurrence of a vent during high-temperature storage, thereby significantly improving reliability, and as a result, the present invention was completed.

### Pouch

A pouch according to the present invention includes a barrier layer, a base material layer disposed on outer surface of the barrier layer, and a sealant layer disposed on inner surface of the barrier layer. Here, the sealant layer includes a first sealant layer disposed directly in contact with the inner surface of the barrier layer and a second sealant layer disposed on the first sealant layer. The sealant layer as a whole (e.g., the combination of the first and second sealant layers), has a melt flow rate (MFR) of about 8.5 g/10 min to about 14.0 g/10 min, more preferably about 9.0 g/10 min to about 13.5 g/10min, when measured at a temperature of about 230°C under a load condition of about 2.16 kg.

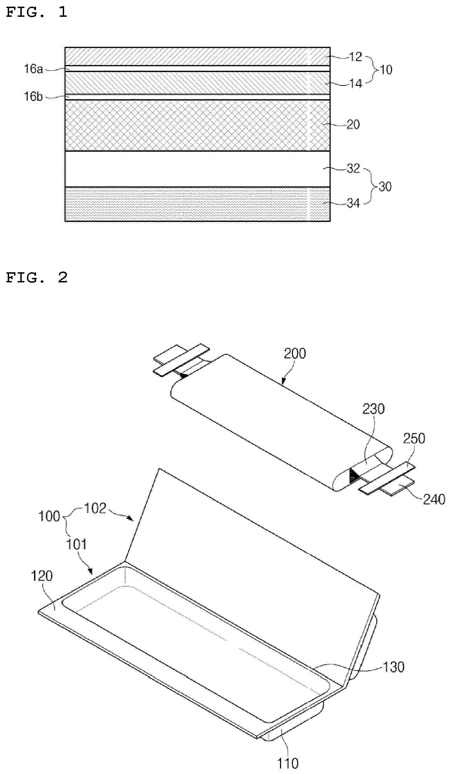

FIG. 1 is a cross-sectional view of a pouch film stack according to an embodiment of the present invention. Hereinafter, a pouch according to the present invention will be described with reference to FIG. 1.

The pouch 100 is a battery case for accommodating an electrode assembly and an electrolyte, and as illustrated in FIG. 1, include a barrier layer 20, a base material layer 10 disposed on one surface of the barrier layer, and a sealant layer 30 disposed on the other surface of the barrier layer.

Specifically, the pouch 100 includes a first case 101 and a second case 102 and may be manufactured by molding a pouch film stack including a barrier layer 20, a base material layer 10 disposed on one surface of the barrier layer, and a sealant layer 30 disposed on the other surface of the barrier layer. For example, the pouch 100 may be manufactured in a method, in which a pouch film stack in which the base layer 10, the barrier layer 20, and the sealant layer 30 are sequentially stacked is inserted into a press molding device, and a pressure is applied to a partial area of the pouch film stack to be stretched so as to form a cup part recessed in one direction.

### (1) Sealant layer

The sealant layer 30 may be configured to seal the pouch by being bonded through thermal compression and be disposed at the innermost layer of the pouch 100.

In the pouch according to the present invention, the sealant layer 30 has a two-layer structure, and specifically includes a first sealant layer 32 and a second sealant layer 34. The first sealant layer 32 is disposed so that one surface thereof is in contact with the barrier layer 20, and the second sealant layer 34 is disposed at an opposite surface of the surface of the first sealant layer 32, which is in contact with the barrier layer 20.

The first sealant layer 32 and the second sealant layer 34 may be formed by co-extruding a resin constituting the first sealant layer and a resin constituting the second sealant layer on the barrier layer 20.

As a method of forming the sealant layer in the pouch, a dry lamination method in which the sealant layer is attached to the barrier layer using a thermosetting adhesive and a co-extrusion method in which a thermoplastic resin is co-extruded on the barrier layer to form the sealant layer are used. Among them, when the sealant layer is formed using the co-extrusion method, a sealant having a melt flow rate greater than that when the sealant layer is formed using the dry lamination method may be formed, and thus, there is an advantage in that a time required for a sealing process is reduced, and the manufacture is easy.

Since a thermosetting adhesive is not used, a pouch having excellent moisture resistance and high-temperature durability may be formed.

The first sealant layer 32 and the second sealant layer 34 may have different compositions. Specifically, the first sealant layer 32 may include an acid-modified polyolefin resin, and the second sealant layer 34 may include a polyolefin resin. As described above, when the first sealant layer 32 is made of the acid-modified polyolefin resin, and the second sealant layer 34 is made of the polyolefin resin, adhesion with the barrier layer 20 and high temperature sealing strength may be improved.

Since the sealant layer 30 is a surface that is in contact with the electrolyte and electrode assembly after the pouch is molded, the sealant layer 30 may have to have insulation and corrosion resistance, and also, since the inside of the sealant layer 30 has to be completely sealed to block movement of the material between the inside and the outside, the sealant layer 30 may have to have height sealability. The polyolefin resin has excellent mechanical properties such as tensile strength, rigidity, surface hardness, abrasion resistance, and heat resistance, and chemical properties such as corrosion resistance and thus is suitable as a material of the sealant layer. However, since the polyolefin resin does not have high adhesion with the barrier layer, when the sealant layer is made of only the polyolefin resin, interfacial peeling may occur between the barrier layer and the sealant layer when exposed to a high temperature or when the internal pressure of the battery increases. Therefore, in the present invention, the acid-modified polyolefin resin into which an acid component capable of improving adhesion with the barrier layer is introduced into the polyolefin resin may be applied as the first sealant layer to improve the adhesion with the barrier layer, thereby excellently implementing all of the adhesion with the barrier layer, the mechanical properties, and the chemical resistance. When the sealant layer is not formed in two layers as in the present invention, but is formed in a single layer made of the acid-modified polyolefin resin, the chemical resistance and mechanical properties may be deteriorated, resulting in a decrease in sealing strength, and when the sealant layer is formed in a single layer made of the polyolefin resin, the adhesion with the barrier layer may be deteriorated, and thus a vent may occur at an interface with the barrier layer when exposed to high temperature.

The acid-modified polyolefin resin may be a polymer modified by block polymerization or graft polymerization of polyolefin with an acid component, for example, a polymer obtained by polymerizing a carboxylic acid such as acrylic acid, methacrylic acid, maleic acid, itaconic acid, crotonic acid, maleic anhydride, itaconic anhydride or an anhydride thereof in polyolefin.

The polyolefin is, for example, may be polyethylene such as low density polyethylene, medium density polyethylene, high density polyethylene, linear low density polyethylene, ethylene-α olefin copolymers; polypropylenes such as homopolypropylene, block copolymers of polypropylene (for example, block copolymers of propylene and ethylene), and random copolymers of polypropylene (for example, random copolymers of propylene and ethylene); propylene-α olefin copolymer; ethylene-butene-propylene trimer, or the lime, but is not limited thereto.

In the pouch according to the present invention, the sealant layer has a melt flow rate (MFR) of about 8.5 g/10 min to about 14.0 g/10 min, which is measured at a temperature of about 230°C under a load condition of about 2.16 kg. When the melt flow rate of the sealant layer exceeds about 14.0 g/10 min, resistance to an internal pressure of the battery is significantly reduced, and thus the vent occurs easily when exposed to the high temperature. That is, the cell vent resistance is significantly reduced. Here, the cell vent resistance means a maximum pressure at which the vent does not occur when a gas is injected into the cell, and the higher the cell vent resistance, the better the high temperature reliability because the vent does not occur under the high-temperature environment.

The melt flow rate of the sealant layer means a melt flow rate of the entire sealant layer including the first sealant layer and the second sealant layer and is a value different from the melt flow rate of each of the first sealant layer and the second sealant layer. In addition, the melt flow rate of the sealant layer is a value measured after co-extrusion. The safety of lithium secondary batteries is affected by the physical properties of the sealant layer after co-extrusion, so the melt flow rate after co-extrusion is important. Since the melt flow rate of the thermoplastic resin varies depending on extrusion conditions in the co-extrusion process, the melt flow rate after the co-extrusion may be a value different from a value derived by simply arithmetically calculating a melt flow rate of a raw material before extrusion.

In the present invention, the melt flow rate of the sealant layer may be measured through the following method.

First, the pouch is cut into a size of about 50 mm × 300 mm, put in hydrochloric acid having a concentration of about 37% by weight, and left for about 3 hours to about 48 hours to melt aluminum so as to separate the sealant layer in the form of a film. Then, after sufficiently rinsing the sealant layer with water, the sealant layer is dried at a temperature of about 60°C for about 2 hours or more. The sealant layer separated in the form of the film through the above method is rolled into a cylinder shape to prepare a sample. Three prepared samples are put into a measuring device (Gottfert MI-40) and melted at a temperature of about 230°C for about 5 minutes, and then, the melt flow rate value is measured through a melt volume rate (MVR) method while applying a load of about 2.16 kg. At this time, it is assumed that a melt density of the sealant layer is about 0.728 g/cm³, and a volume is converted into a mass to obtain the melt flow rate.

In the case of the sealant layer having the two-layer structure formed through the co-extrusion, the physical properties such as the melting point and the melt flow rate are different because the composition of the first sealant layer and the second sealant layer are different. Due to the difference in physical property and thickness of the first sealant layer and the second sealant layer, the melt flow rate of the entire sealant layer may vary, and when the melt flow rate of the entire sealant layer exceeds about 14.0 g/10min, peeling may occur at the interface between the sealant layer and the barrier layer, which may cause a vent when the battery is exposed to the high temperature, or the internal pressure of the battery increases. As a result of repeated research to solve this limitation, the inventors of the present invention have found that the melt flow rate of the entire sealant layer including the first sealant layer and the second sealant layer may be altered by controlling a pressure that is applied to a filter of the co-extrusion device (hereinafter, referred to as 'resin pressure') during the co-extrusion process, and when the melt flow rate of the entire sealant layer is controlled within a specific range, that is, from 8.5 g/10 min to 14.0 g/10min, through the resin pressure control, the interfacial peeling between the sealant layer and the barrier layer is suppressed, resulting in significantly improving resistance to the internal pressure of the battery, that is, cell vent resistance characteristics.

The resin pressure increases as the number of times of co-extrusion of the resin increases. Thus, the pressure applied to the filter of the co-extrusion device may be monitored over time, and the resin pressure may be controlled by replacing the filter when the resin pressure exceeds a set range. The range of resin pressure for forming the sealant layer having a desired melt flow rate may vary according to the types of resins constituting the first sealant layer and the second sealant layer, the thicknesses of the first sealant layer and the second sealant layer, and the types of co-extrusion devices, and a person skilled in the art will be able to derive a resin pressure range so that the melt flow rate of the sealant layer is about 14.0 g/10min or less through ordinary experiments.

In the present invention, a thickness ratio of the second sealant layer to the thickness of the first sealant layer is about 0.8 to about 1.2, preferably about 0.9 to about 1.1. When the ratio of the thickness of the second sealant layer to the thickness of the first sealant layer satisfies the above range, the pouch having excellent adhesion to the barrier layer, insulation, and sealing strength may be realized. If one of the first sealant layer and the second sealant layer is too thick or too thin, the resin constituting the sealant layer may flow out during the sealing, or the adhesion and sealing performance between the sealant layer and the barrier layer may be deteriorated.

The first sealant layer has a thickness of about 25 µm to about 80 µm, preferably about 30 µm to about 70 µm, and more preferably about 30 µm to about 60 µm. When the thickness of the first sealant layer satisfies the above range, the adhesion with the barrier layer is excellent.

The second sealant layer has a thickness of about 20 µm to about 80 µm, preferably about 25 µm to about 70 µm, and more preferably about 30 µm to about 60 µm. When the thickness of the second sealant layer satisfies the above range, the sealing performance is excellent.

The total thickness of the sealant layer combining the first sealant layer and the second sealant layer is about 45 µm to about 100 µm, preferably about 50 µm to about 100 µm, more preferably about 60 µm to about 100 µm, and even more preferably about 70 µm to about 90 µm. When the total thickness of the sealant layer satisfies the above range, a defect in which the resin flows out during the sealing may be suppressed, and an amount of heat and time required for the sealing may be appropriately adjusted.

### (2) Barrier layer

The barrier layer 20 is configured to secure mechanical strength of the pouch, block introduction and discharge of a gas or moisture outside the secondary battery, and prevent the electrolyte from leaking.

The barrier layer 20 may have a thickness of about 40 µm to about 100 µm, more preferably about 40 µm to about 90 µm, and more preferably about 50 µm to about 80 µm. When the thickness of the barrier layer satisfies the above range, appropriate mechanical strength and barrier properties may be secured.

The barrier layer 20 may be made of a metal material, and specifically, may be made of an aluminum alloy thin film.

The aluminum alloy thin film may include aluminum and a metal element in addition to the aluminum, for example, at least one or two or more metal elements selected from the group consisting of iron (Fe), copper (Cu), chromium (Cr), manganese (Mn), nickel (Ni), magnesium (Mg), and zinc (Zn).

Preferably, the aluminum alloy thin film may have an iron (Fe) content of about 1.2 wt% to about 1.7 wt%, preferably about 1.3 wt% to about 1.7 wt%, more preferably about 1.3 wt% to about 1.45 wt%. When the iron (Fe) content in the aluminum alloy thin film satisfies the above range, an occurrence of the cracks or pinholes may be minimized even when the cup part is formed deeply.

### (3) Base material layer

The base material layer 10 may be disposed on the outermost layer of the pouch and be configured to protect the electrode assembly from an external impact and electrically insulate the electrode assembly.

The base material layer 10 may be made of a polymer material, for example, made of at least one or more polymer materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazoles, polyarylates, and Teflon.

The base material layer 10 may have a single-layer structure or, as illustrated in FIG. 2, may have a multi-layer structure in which different polymer films 12 and 14 are stacked. When the base material layer 10 may have a multi-layer structure, an adhesive layer 16a may be disposed between the polymer films. In either the single-layer structure, or the multi-layer structure, the base material layer 10 may be adhered to the barrier layer 20 via an adhesive layer 16b or any other mechanism known in the art.

The base material layer 10 has a total thickness of about 10 µm to about 60 µm, preferably about 20 µm to about 50 µm, and more preferably about 30 µm to about 50 µm. When the base material layer has the multi-layer structure, the thickness may be a thickness including the adhesive layer. When the base material layer 10 satisfies the above range, durability, insulation, and moldability may be excellent. When the thickness of the base material layer is too thin, the durability may be reduced, and the base material layer may be damaged during the molding process. When the thickness is too thick, the moldability may be deteriorated, the overall thickness of the pouch may increase, and a battery accommodation space may be reduced, resulting in reducing energy density.

According to one embodiment, the base material layer 10 may have a stacked structure of a polyethylene terephthalate (PET) film and a nylon film. Here, the nylon film may be disposed on a side of the barrier layer 20, that is, inside the barrier layer 20, and the polyethylene terephthalate film may be disposed on a surface side of the pouch.

Polyethylene terephthalate (PET) may have excellent durability and electrical insulation properties, and thus, when the PET film is placed on the surface side, the durability and insulation properties may be excellent. However, in the case of the PET film, since the adhesiveness with an aluminum alloy thin film constituting the barrier layer 20 is weak, and a stretching behavior is different, when the PET film is placed on the side of the barrier layer, the base material layer and the barrier layer may be delaminated during the molding process, and the barrier layer may not be uniformly stretched to cause deterioration of the moldability. In comparison, since the nylon film has a stretching behavior similar to that of the aluminum alloy thin film constituting the barrier layer 20, an effect of improving the moldability may be obtained when the nylon film is disposed between the polyethylene terephthalate and the barrier layer.

The polyethylene terephthalate film may have a thickness of about 5 µm to about 20 µm, preferably about 5 µm to about 15 µm, more preferably about 7 µm to about 15 µm, and the nylon film may have a thickness of about 10 µm to about 40 µm, preferably about 10 µm to about 35 µm, more preferably about 15 µm to about 25 µm. When the thicknesses of the polyethylene terephthalate film and the nylon film satisfy the above ranges, the moldability and rigidity after the molding may be excellent.

### Lithium secondary battery

Next, a lithium secondary battery according to the present invention will be described.

A lithium secondary battery according to the present invention includes: an electrode assembly formed by stacking a positive electrode, a separator, and a negative electrode; an electrolyte; and a pouch-type battery case accommodating the electrode assembly and the electrolyte. Here, the battery case is the pouch according to the present invention described above.

The pouch according to the present invention described above (i.e., designed so that the sealant layer includes the first sealant layer and the second sealant layer, and the melt flow rate of the entire sealant layer including the first sealant layer and the second sealant layer is about 14.0 g/10min) has higher sealing strength compared to that of the pouch according to the related art. Therefore, when the pouch of the present invention is applied to the lithium secondary battery, the sealant layer may not be easily ruptured even when the internal pressure of the secondary battery increases, thereby implementing high-temperature reliability.

Specifically, the lithium secondary battery to which the pouch according to the present invention is applied as the battery case may have cell vent resistance of about 7.7 bars or more, preferably about 7.7 bars to 15 bars, and more preferably about 8 bars to about 15 bars at a temperature of about 60°C.

In addition, the lithium secondary battery to which the pouch according to the present invention is applied as the battery case may have an accelerated high-temperature storage period of about 15 days or more, preferably about 15 days to about 30 days, more preferably about 15 days to about 25 days, which is measured while charging up to SOC 100% under a temperature condition of about 70°C at 1-day intervals.

Since specific details related to the pouch are the same as those described above, the remaining components except for the pouch will be described below.

FIG. 2 is a view of a lithium secondary battery according to an embodiment of the present invention. Hereinafter, each configuration of the lithium secondary battery according to the present invention will be described in more detail with reference to FIG. 2.

### Electrode assembly

An electrode assembly 200 may include a plurality of electrodes and a plurality of separators, which are alternately stacked. The plurality of electrodes may include a positive electrode and a negative electrode, which are alternately stacked with the separator therebetween and have opposite polarities.

The positive and negative electrodes may be prepared by applying a composition for forming an active material layer containing an electrode active material on a collector and then drying the composition.

A composition for forming a positive electrode active material layer may include a positive electrode active material, a binder, and a conductive material. A composition for forming the negative active material layer may include a negative active material, a binder, and a conductive material.

The collector is not particularly limited as long as the collector does not cause chemical change in the battery and has high conductivity, for example, the collector may be made of copper, stainless steel, aluminum, nickel, titanium, baking carbon, copper or stainless steel with a surface treated with carbon, nickel, titanium, or silver, or an aluminum-cadmium alloy. In addition, the collector may typically have a thickness of about 3 µm to about 500 µm, and fine unevenness may be formed on the surface of the collector to enhance bonding strength of the active material. For example, the negative electrode collector may have various shapes such as a film, a sheet, a foil, a net, a porous body, a foam body, or a non-woven fabric.

The positive electrode active material may use various positive electrode active materials used in the art as materials capable of causing an electrochemical reaction, for example, include: layered compounds such as lithium cobalt oxide (LiCoO₂) and lithium nickel oxide (LiNiO₂); lithium manganese oxide; lithium nickel oxide represented by the formula of LiNi_{1-y}M_{y}O₂ (where, M = Co, Mn, Al, Cu, Fe, Mg, B, Cr, Zn, or Ga, and includes one or more elements among the elements, 0.01≤y≤0.7); lithium nickel cobalt manganese composite oxides represented by Li_{1+z}Ni_{b}Mn_{c}Co_{1-(b+c+d)}M_{d}O₍₂₋ₑ)Ae such as Li1+zNi1/3Co1/3Mn1/3O2 or Li_{1+z}Ni_{0.4}Mn_{0.4}Co_{0.2}O₂ (where, -0.5≤z≤0.5, 0.1≤b≤0.8, 0.1≤c≤0.8, 0≤d≤0.2, 0≤e≤0.2, b+c+d<1, M = Al, Mg, Cr, Ti, Si, or Y, and A = F, P or Cl); and olivine lithium metal phosphate represented by the formula Li₁₊ₓM_{1-y}M'_{y}PO_{4-z}X_{z} (where, M = transition metal, preferably, Fe, Mn, Co, or Ni, M' = Al, Mg, or Ti , X = F, S, or N, -0.55≤x≤+0.5, 0≤y≤0.5, and 0≤z≤0.1), but are not limited thereto. The positive electrode active material may be contained at an amount of about 80 wt% to about 99 wt% based on the total weight of the positive electrode active material layer.

A compound capable of reversible lithium intercalation and deintercalation may be used as the negative active material. Specific examples may include: carbonaceous materials such as artificial graphite, natural graphite, graphitized carbon fiber, and amorphous carbon; metallic compounds capable of being alloyed with lithium, such as Si, Al, Sn, Pb, Zn, Bi, In, Mg, Ga, Cd, an Si alloy, an Sn alloy, or an Al alloy; metal oxides capable of doping and undoping lithium, such as SiO_{β} (0<β<2), SnO2, vanadium oxide, and lithium vanadium oxide; or a composite including the above metallic compound and the carbonaceous material, such as a Si-C composite or a Sn-C composite, and any one or a mixture of two or more of the above-described materials may be used. Also, a metal lithium thin film may be used as the negative active material. In addition, both low crystalline carbon and high crystalline carbon may be used as the carbon material. Representatively, the low crystalline carbon may include soft carbon and hard carbon, and the high crystalline carbon may include high-temperature calcined carbon such as amorphous, platy, scaly, spherical or fibrous natural graphite or artificial graphite, kish graphite, pyrolytic carbon, mesophase pitch based carbon fiber, meso-carbon microbeads, mesophase pitches, petroleum or coal tar pitch derived cokes, and the like. The negative electrode active material may be contained at an amount of about 80 wt% to about 99 wt% based on the total weight of the negative electrode active material layer.

The binder is a component that assists bonding between the conductive material, the active material, and the collector and is typically added at an amount of about 0.1 wt% to about wt10% based on the total weight of the active material layer. Examples of the binder may include polyvinylidene fluoride (PVDF), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylenepropylene-diene polymer (EPDM), sulfonated EPDM, styrenebutadiene rubber, nitrile-butadiene rubber, fluorine rubber, various copolymers thereof.

The conductive material may be a component for further improving the conductivity of the active material and may be added at an amount of about 10 wt% or less, specifically about 5 wt% or less, based on the total weight of the active material layer. The conductive material may not be particularly limited as long as the material does not cause a chemical change in the battery and has conductivity. For example, the conductive material may include: graphite such as natural graphite and artificial graphite; carbon black such as acetylene black, Ketjenblack, channel black, furnace black, lamp black, and summer black; conductive fiber such as carbon fiber and metal fiber; metal powder such as carbon fluorine, aluminum, and nickel powder; conductive whisker such as zinc oxide and potassium titanate; conductive metal oxide such as titanium oxide; or derivative of polyphenylene.

The separator may separate the negative electrode from the positive electrode and provide a passage for movement of lithium ions and may be used without particular limitation as long as it is normally used as a separator in a lithium secondary battery, and in particular, it is preferable to have low resistance to ion movement of the electrolyte and excellent ability to absorb the electrolyte. Particularly, the separator may include a porous polymer film, for example, made of a polyolepin-based polymer such as an ethylene homopolymer, a propylene homopolymer, an ethylene/butene copolymer, an ethylene/hexene copolymer, and an ethylene/methacrylate copolymer or at least two-layered stack structure thereof. In addition, the separator may be a typical porous non-woven fabric, for example, a non-woven fabric made of glass fiber with a high melting point, or polyethylene terephthalate fiber. In addition, an applied separator containing a ceramic component or a polymer material may be used to secure heat resistance or mechanical strength and may be selectively used in a single layer or multilayer structure.

The electrode assembly 200 may include a plurality of electrode tabs 230 welded to each other. The plurality of electrode tabs 230 may be connected to the plurality of electrodes 210 and protrude from the electrode assembly 200 to the outside to serve as a passage through which electrons move between the inside and the outside of the electrode assembly 200. The plurality of electrode tabs 230 may be disposed inside the pouch 100.

The electrode tab 230 connected to the positive electrode and the electrode tab 230 connected to the negative electrode may protrude in different directions with respect to the electrode assembly 200. However, the present invention is not limited thereto, and the electrode tab 230 connected to the positive electrode and the electrode tab 230 connected to the negative electrode may protrude in the same direction in parallel with each other.

A lead 240 supplying electricity to the outside of the secondary battery may be connected to the plurality of electrode tabs 230 by spot welding. The lead 240 may have one end connected to the plurality of electrode tabs 230 and the other end protruding to the outside of the pouch 100.

A portion of the lead 240 may be surrounded by an insulating part 250. For example, the insulating part 250 may include an insulating tape. The insulating part 250 may be disposed between the terrace 120 and the second case 102 of the first case 101, and in this state, the terrace 120 and the second case 102 may be thermally fused to each other. In this case, a portion of each of the terrace 120 and the second case 102 may be thermally fused to the insulating part 250. Thus, the insulating part 250 may prevent the generated from the electrode assembly 200 from flowing to the pouch 100 through the lead 240 and may maintain sealing of the pouch 100.

### Electrolyte

The electrolyte may be configured to move lithium ions generated by an electrochemical reaction of the electrode during charging and discharging of the secondary battery and may include an organic solvent and lithium salt.

The organic solvent may be used without particular limitation as long as it serves as a medium through which ions involved in the electrochemical reaction of the battery move Specifically, examples of the organic solvent may include ester solvents such as methyl acetate, ethyl acetate, γ-butyrolactone, and ε-caprolactone; ether solvents such as dibutyl ether or tetrahydrofuran; ketone solvents such as cyclohexanone; aromatic hydrocarbon solvents such as benzene and fluorobenzene; carbonate solvents such as dimethyl carbonate (DMC), diethyl carbonate (DEC), ethyl methyl carbonate (EMC), ethylene carbonate (EC), and propylene carbonate (PC); alcohol solvents such as ethyl alcohol and isopropyl alcohol; nitriles such as R-CN (R is a C2 to C20 straight-chain, branched or cyclic hydrocarbon group, and may include a double-bonded aromatic ring or an ether bond); amides such as dimethylformamide; dioxolanes such as 1,3-dioxolane; or sulfolanes. Among them, carbonate-based solvents are preferable, and cyclic carbonates (e.g., ethylene carbonate or propylene carbonate). having high ionic conductivity and high permittivity that may increase in charging and discharging performance of the battery, and low-viscosity linear carbonate-based compounds (e.g., mixture of ethyl methyl carbonate, dimethyl carbonate, or diethyl carbonate) is more preferable.

The lithium salt may be used Absence particular limitation as long as it is a compound capable of providing lithium ions used in the lithium secondary battery. Specifically, the lithium salt may include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB (C₂O₄)₂, or the like. The concentration of the lithium salt may be preferably used within the range of about 0.1 M to about 5.0 M, preferably about 0.1 M to about 3,0 M. When the concentration of the lithium salt is within the above range, the electrolyte has appropriate conductivity and viscosity, and thus, excellent electrolyte performance may be exhibited, and the lithium ions may move effectively.

In addition to the components of the electrolyte, the electrolyte may further include an adhesive for the purpose of improving lifespan characteristics of the battery, suppressing a decrease in battery capacity, and improving a discharge capacity of the battery.

Hereinafter, the present invention will be described in more detail through a specific embodiment.

### Manufacturing Example

A stacked film in which a polyethylene terephthalate film (thickness of about 12 µm)/adhesive layer (thickness of about 3 µm)/nylon film (thickness of about 15 µm) are sequentially stacked was prepared as the base material layer. Subsequently, a urethane adhesive was applied to a thickness of about 3 µm on the nylon film of the base layer, and an aluminum alloy thin film (barrier layer having thickness of about 40 µm) was stacked and then was stacked using a dry lamination method.

Next, a sealant layer including a first sealant layer and a second sealant layer was formed by co-extruding a maleic anhydride-modified polypropylene resin and a polypropylene resin on a surface opposite to a surface on which the base layer of the aluminum alloy thin film is stacked. During the co-extrusion, the maleic anhydride-modified polypropylene resin layer was in contact with the aluminum alloy thin film, and a thickness of each of the first sealant layer and the second sealant layer was about 40 µm.

During the formation of the sealant layer, pouch film stacks A to F were manufactured by the co-extrusion while changing a resin pressure.

After the prepared pouch film stack is cut to a size of about 50 mm × 300 mm, the pouch film stack was put in hydrochloric acid having a concentration of about 37 wt% to melt an aluminum alloy thin film, and then, the film-shaped sealant layer was separated. Then, the separated sealant layer was sufficiently rinsed with water and dried at a temperature of about 60°C for about 2 hours, and then rolled into a cylindrical shape to prepare a sample. The sample was put into a melt flow rate measuring device (Gottfert MI-40) and melted at a temperature of about 230°C for about 5 minutes, and then, a melt flow rate (MFR) of the sealant layer was measured while applying a load of about 2.16 kg. The measurement was performed by a melt volume rate (MVR) method, and it was assumed that a melt density of the sealant layer is about 0.728 g/cm³.

Results of the measurement are shown in Table 1 below.

**[Table 1]**

| | Sealant layer MFR (g/10 min) |
|---|---|
| A | 9.12 |
| B | 10.68 |
| C | 11.40 |
| D | 13.20 |
| E | 13.56 |
| F | 15.36 |

### Embodiment and Comparative Example

A pouch for a secondary battery according to Embodiments 1 to 5 and Comparative Example 1, which has a cup part were prepared by drawing molding each of the pouch film stacks A to F prepared in the above Manufacturing Example. Then, the sealant layer of each pouch prepared according to Embodiments 1 to 5 and Comparative Example 1 was sealed by thermal bonding, and a sealed portion was cut to a width of about 15 mm to prepare a sample. Then, the sealed portion of the sample was opened, and the sample was mounted on a peel strength measuring device so that a distance between grips is about 30 mm, and then, a T-peel test was performed at a temperature of about 25°C or 60°C at a rate of about 5 mm/min to measure the sealing strength. Here, the sealing strength was expressed as a percentage of the peel strength according to Embodiments 2 to 4 and Comparative Example 1 with respect to a reference value when the peel strength according to Embodiment is defined as the reference value (100).

Results of the measurement are shown in Table 2 below.

**[Table 2]**

| | Pouch film stack | Sealing strength at room temperature (%) | Sealing strength at high temperature (%) |
|---|---|---|---|
| Embodiment 1 | A | 100 | 100 |
| Embodiment 2 | B | 94.7 | 100 |
| Embodiment 3 | C | 89.4 | 98.1 |
| Embodiment 4 | D | 75.2 | 93.3 |
| Embodiment 5 | E | 73.5 | 81.0 |
| Comparative Example 1 | F | 38.1 | 21.0 |

As shown in Table 2, the pouches according to Embodiments 1 to 5, in which the sealant layer has a melt flow rate of about 14 g/10min or less were compared with the pouch according to Comparative Example 1, in which the sealant layer has a melt flow rate of more than about 14 g/10min at room temperature. As a result, it was seen that the pouch has remarkably excellent sealability at room temperature and the high temperatures.

### Experimental Example: cell vent resistance of secondary battery and high-temperature acceleration test

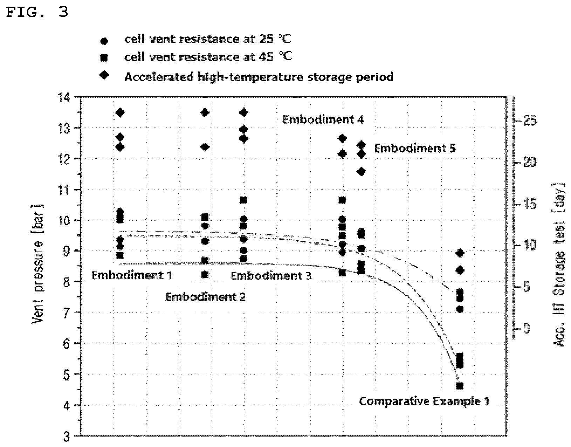

The stack-type electrode assembly was accommodated in the pouch for the secondary battery prepared according to Embodiments 1 to 5 and Comparative Example 1, and an electrolyte was injected, and then, the sealant layer was sealed to manufacture a lithium secondary battery. The cell vent resistance and the accelerated high-temperature storage period of each of the manufactured lithium secondary batteries were measured in the following manner. For accurate evaluation, the measurement was performed twice or three times for each lithium secondary battery, and the measurement results were shown in FIG. 3.

### (1) Cell vent resistance measurement method:

A hole of about 1 mm or less was drilled in the lithium secondary battery, and an internal pressure of the cell was measured over time while injecting an inert gas at temperatures of about 25°C and about 60°C, and a maximum internal pressure reached until the vent occurs was evaluated as the cell vent resistance.

Since the cell pressure drops to the atmospheric pressure when the vent occurs, a point at which the cell pressure drops to the atmospheric pressure was evaluated as a vent occurrence time point.

### (2) Accelerated high-temperature storage period:

The lithium secondary battery was stored at a temperature of about 70°C and then was charged up to SOC 100% at 1-day intervals, and then the storage period for which the secondary battery is capable of being stored without venting was measured.

As illustrated in FIG. 3, in the lithium secondary batteries according to Embodiments 1 to 5 to which the pouch, in which the sealant layer has a melt flow rate that satisfies a range of about 14.0 g/10min or less, which is the range of the present invention, is applied, it was seen that the cell vent resistance at temperatures of about 60°C and 25°C is higher than about 7.7 bars, and the accelerated high-temperature storage period is also higher than about 15 days. In contrast, in the lithium secondary battery according to Comparative Example 1 to which the pouch in which the sealant layer has a melt flow rate exceeding about 14.0 g/10min, is applied, it was seen that the cell vent resistance and the accelerated high-temperature storage period are significantly reduced at a temperature of about 60°C.

The pouch for the secondary battery according to the present invention, which is designed so that the sealant layer is provided as the two layers, and the melt flow rate (MFR) of the entire sealant layer is 14 g/10 min or less, may have the sealing strength greater than that of the pouch according to the related art. Therefore, when the pouch according to the present invention is applied to the lithium secondary battery, the sealant layer may not be easily ruptured even when the internal pressure of the secondary battery increases. Specifically, the secondary battery according to the present invention may have the cell internal pressure at which the vent occurs (referred to as 'cell vent resistance') as high as about 7.7 bars or more and may have excellent high-temperature reliability as a storage period of about 15 days or more without the venting during an accelerated high-temperature storage test (accelerated high-temperature storage period).

## Claims

1. A pouch for a secondary battery, comprising:
a barrier layer configured to secure mechanical strength of the pouch, block introduction and discharge of a gas or moisture outside the secondary battery, and prevent the electrolyte from leaking;
a base material layer disposed on one surface of the barrier layer; and
a sealant layer disposed on the other surface of the barrier layer,
wherein the sealant layer comprises:
a first sealant layer in direct contact with the other surface of the barrier layer; and
a second sealant layer disposed on the first sealant layer opposite to the barrier layer,
wherein the sealant layer has a melt flow rate (MFR) from 8.5 g/10 min to 14.0 g/10 min, which is measured as set forth in the specification at a temperature of 230°C under a load condition of 2.16 kg;
a ratio of a thickness of the second sealant layer to a thickness of the first sealant layer ranges between 0.8 and 1.2;
the first sealant layer has a thickness of 25 µm to 80 µm;
the second sealant layer has a thickness of 20 µm to 80 µm; and
a total thickness of the sealant layer ranges between 45 µm and 100 µm.

2. The pouch of claim 1, wherein the first sealant layer and the second sealant layer are formed through co-extrusion.

3. The pouch of claim 1 or 2, wherein the first sealant layer comprises an acid-modified polyolefin resin.

4. The pouch of any of the preceding claims, wherein the second sealant layer comprises a polyolefin resin.

5. The pouch of any of the preceding claims, wherein the barrier layer comprises an aluminum alloy.

6. The pouch of any of the preceding claims, wherein the base material layer comprises at least one material selected from the group consisting of: polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazoles, polyarylates, and Teflon.

7. A lithium secondary battery comprising:
an electrode assembly, in which a positive electrode, a separator, and a negative electrode are stacked upon one another;
an electrolyte; and
a pouch-type battery case comprising a cup part configured to accommodate the electrode assembly and the electrolyte,
wherein the battery case is the pouch of any of the preceding claims.

8. The lithium secondary battery of claim 7, wherein a cell vent resistance of the lithium secondary battery is 7.7 bars or more at a temperature of 60°C measured as set forth in the description.

9. The lithium secondary battery of claim 8 or 9, wherein an accelerated high-temperature storage period, which is measured by charging the lithium secondary battery up to SOC 100% at a temperature of 70°C at an 1-day interval, is 15 days or more.

10. A method of forming a pouch for a secondary battery, the method comprising the steps of:
stacking a base material layer on a first surface of a barrier layer; and
co-extruding a sealant layer, including a first sealant layer and a second sealant layer, on a second surface of the barrier layer,
wherein the sealant layer has a melt flow rate (MFR), after the co-extruding step, of from 8.5 g/10 min 14.0 g/10 min, which is measured at a temperature of 230°C under a load condition of 2.16 kg;
a ratio of a thickness of the second sealant layer to a thickness of the first sealant layer ranges between 0.8 and 1.2;
the first sealant layer has a thickness of 25 µm to 80 µm;
the second sealant layer has a thickness of 20 µm to 80 µm; and
a total thickness of the sealant layer ranges between 45 µm and 100 µm.

11. The method of claim 10, wherein resin pressure is controlled, using a co-extrusion device, during the co-extruding step, wherein the resin pressure is applied to a filter of the co-extrusion device; and the resin pressure is controlled so that the melt flow rate of the entire sealant layer is controlled to be from 8.5 g/10 min to 14.0 g/10 min.

## Patentansprüche

1. Pouch für eine Sekundärbatterie, umfassend:
eine Sperrschicht, die konfiguriert ist, um die mechanische Festigkeit des Pouchs zu sichern, die Einführung und Abgabe eines Gases oder von Feuchtigkeit außerhalb der Sekundärbatterie zu blockieren und zu verhindern, dass der Elektrolyt austritt;
eine Basismaterialschicht, die auf einer Oberfläche der Sperrschicht angeordnet ist; und
eine Dichtungsschicht, die auf der anderen Oberfläche der Sperrschicht angeordnet ist,
wobei die Dichtungsschicht umfasst:
eine erste Dichtungsschicht in direktem Kontakt mit der anderen Oberfläche der Sperrschicht; und
eine zweite Dichtungsschicht, die auf der ersten Dichtungsschicht gegenüber der Sperrschicht angeordnet ist,
wobei die Dichtungsschicht eine Schmelzflussrate (MFR) von 8,5 g/10 min bis 14,0 g/10 min aufweist, die wie in der Beschreibung dargelegt bei einer Temperatur von 230 °C unter einer Lastbedingung von 2,16 kg gemessen wird;
ein Verhältnis einer Dicke der zweiten Dichtungsschicht zu einer Dicke der ersten Dichtungsschicht zwischen 0,8 und 1,2 liegt;
die erste Dichtungsschicht eine Dicke von 25 µm bis 80 µm aufweist;
die zweite Dichtungsschicht eine Dicke von 20 µm bis 80 µm aufweist; und
eine Gesamtdicke der Dichtungsschicht zwischen 45 µm und 100 µm liegt.

2. Beutel nach Anspruch 1, wobei die erste Dichtungsschicht und die zweite Dichtungsschicht durch Koextrusion gebildet werden.

3. Beutel nach Anspruch 1 oder 2, wobei die erste Dichtungsschicht ein säuremodifiziertes Polyolefinharz umfasst.

4. Beutel nach einem der vorstehenden Ansprüche, wobei die zweite Dichtungsschicht ein Polyolefinharz umfasst.

5. Beutel nach einem der vorstehenden Ansprüche, wobei die Sperrschicht eine Aluminiumlegierung umfasst.

6. Beutel nach einem der vorstehenden Ansprüche, wobei die Basismaterialschicht mindestens ein Material umfasst, das ausgewählt ist aus der Gruppe bestehend aus: Polyethylen, Polypropylen, Polycarbonat, Polyethylenterephthalat, Polyvinylchlorid, Acrylpolymer, Polyacrylnitril, Polyimid, Polyamid, Cellulose, Aramid, Nylon, Polyester, Polyparaphenylenbenzobisoxazolen, Polyarylaten und Teflon.

7. Lithium-Sekundärbatterie, umfassend:
eine Elektrodenanordnung, in der eine positive Elektrode, ein Separator und eine negative Elektrode aufeinander gestapelt sind;
einen Elektrolyten; und
ein pouchartiges Batteriegehäuse, umfassend ein Becherteil, das konfiguriert ist, um die Elektrodenanordnung und den Elektrolyten aufzunehmen,
wobei das Batteriegehäuse der Beutel nach einem der vorstehenden Ansprüche ist.

8. Lithium-Sekundärbatterie nach Anspruch 7, wobei ein Zellenentlüftungswiderstand der Lithium-Sekundärbatterie 7,7 bar oder mehr bei einer Temperatur von 60 °C beträgt, gemessen wie in der Beschreibung dargelegt.

9. Lithium-Sekundärbatterie nach Anspruch 8 oder 9, wobei eine beschleunigte Hochtemperaturlagerzeit, die durch Laden der Lithium-Sekundärbatterie bis zu 100 % SOC bei einer Temperatur von 70 °C in einem 1-Tage-Intervall gemessen wird, 15 Tage oder mehr beträgt.

10. Verfahren zum Bilden eines Pouchs für eine Sekundärbatterie, wobei das Verfahren die folgenden Schritte umfasst:
Stapeln einer Basismaterialschicht auf einer ersten Oberfläche einer Sperrschicht; und
Coextrudieren einer Dichtungsschicht, die eine erste Dichtungsschicht und eine zweite Dichtungsschicht umfasst, auf einer zweiten Oberfläche der Sperrschicht,
wobei die Dichtungsschicht eine Schmelzflussrate (MFR) nach dem Coextrusionsschritt von 8,5 g/10 min bis 14,0 g/10 min aufweist, die bei einer Temperatur von 230 °C unter einer Lastbedingung von 2,16 kg gemessen wird;
ein Verhältnis einer Dicke der zweiten Dichtungsschicht zu einer Dicke der ersten Dichtungsschicht zwischen 0,8 und 1,2 liegt;
die erste Dichtungsschicht eine Dicke von 25 µm bis 80 µm aufweist;
die zweite Dichtungsschicht eine Dicke von 20 µm bis 80 µm aufweist; und
eine Gesamtdicke der Dichtungsschicht zwischen 45 µm und 100 µm liegt.

11. Verfahren nach Anspruch 10, wobei der Harzdruck unter Verwendung einer Koextrusionsvorrichtung während des Coextrusionsschritts gesteuert wird, wobei der Harzdruck auf einen Filter der Koextrusionsvorrichtung angewendet wird; und der Harzdruck so gesteuert wird, dass die Schmelzflussrate der gesamten Dichtungsschicht so gesteuert wird, dass sie von 8,5 g/10 min bis 14,0 g/10 min beträgt.

## Revendications

1. Poche pour une batterie secondaire, comprenant :
une couche barrière configurée pour assurer la résistance mécanique de la poche, bloquer l'introduction et la décharge d'un gaz ou d'humidité à l'extérieur de la batterie secondaire, et empêcher l'électrolyte de fuir ;
une couche de matériau de base disposée sur une surface de la couche barrière ; et
une couche d'étanchéité disposée sur l'autre surface de la couche barrière,
dans laquelle la couche d'étanchéité comprend :
une première couche d'étanchéité en contact direct avec l'autre surface de la couche barrière ; et
une seconde couche d'étanchéité disposée sur la première couche d'étanchéité à l'opposé de la couche barrière,
dans laquelle la couche d'étanchéité a un indice de fluidité à chaud (MFR) de 8,5 g/10 min à 14,0 g/10 min, qui est mesuré comme indiqué dans la description à une température de 230 °C dans des conditions de charge de 2,16 kg ;
un rapport d'une épaisseur de la seconde couche d'étanchéité sur une épaisseur de la première couche d'étanchéité est compris entre 0,8 et 1,2 ;
la première couche d'étanchéité a une épaisseur de 25 µm à 80 µm ;
la seconde couche d'étanchéité a une épaisseur de 20 µm à 80 µm ; et
une épaisseur totale de la couche d'étanchéité est comprise entre 45 µm et 100 µm.

2. Poche selon la revendication 1, dans laquelle la première couche d'étanchéité et la seconde couche d'étanchéité sont formées par co-extrusion.

3. Poche selon la revendication 1 ou 2, dans laquelle la première couche d'étanchéité comprend une résine de polyoléfine modifiée par un acide.

4. Poche selon l'une quelconque des revendications précédentes, dans laquelle la seconde couche d'étanchéité comprend une résine de polyoléfine.

5. Poche selon l'une quelconque des revendications précédentes, dans laquelle la couche barrière comprend un alliage d'aluminium.

6. Poche selon l'une quelconque des revendications précédentes, dans laquelle la couche de matériau de base comprend au moins un matériau choisi dans le groupe constitué par : le polyéthylène, le polypropylène, le polycarbonate, le polyéthylène téréphtalate, le polychlorure de vinyle, un polymère acrylique, le polyacrylonitrile, le polyimide, le polyamide, la cellulose, l'aramide, le nylon, le polyester, les polyparaphénylène benzobisoxazoles, les polyarylates, et le Téflon.

7. Batterie secondaire au lithium comprenant :
un ensemble d'électrodes, dans lequel une électrode positive, un séparateur, et une électrode négative sont empilés les uns sur les autres ;
un électrolyte ; et
un boîtier de batterie de type poche comprenant une partie de coupelle configurée pour loger l'ensemble d'électrodes et l'électrolyte,
dans laquelle le boîtier de batterie est la poche selon l'une quelconque des revendications précédentes.

8. Batterie secondaire au lithium selon la revendication 7, dans laquelle une résistance d'évent de cellule de la batterie secondaire au lithium est de 7,7 bars ou plus à une température de 60 °C mesurée comme indiqué dans la description.

9. Batterie secondaire au lithium selon la revendication 8 ou 9, dans laquelle une période de stockage à haute température accélérée, qui est mesurée en chargeant la batterie secondaire au lithium jusqu'à 100 % de SOC à une température de 70 °C à un intervalle de 1 jour, est de 15 jours ou plus.

10. Procédé de formation d'une poche pour une batterie secondaire, le procédé comprenant les étapes consistant à :
empiler une couche de matériau de base sur une première surface d'une couche barrière ; et
co-extruder une couche d'étanchéité, comprenant une première couche d'étanchéité et une seconde couche d'étanchéité, sur une seconde surface de la couche barrière,
dans lequel la couche d'étanchéité a un indice de fluidité à chaud (MFR), après l'étape de co-extrusion, de 8,5 g/10 min à 14,0 g/10 min, qui est mesuré à une température de 230 °C dans des conditions de charge de 2,16 kg ;
un rapport d'une épaisseur de la seconde couche d'étanchéité sur une épaisseur de la première couche d'étanchéité est compris entre 0,8 et 1,2 ;
la première couche d'étanchéité a une épaisseur de 25 µm à 80 µm ;
la seconde couche d'étanchéité a une épaisseur de 20 µm à 80 µm ; et
une épaisseur totale de la couche d'étanchéité est comprise entre 45 µm et 100 µm.

11. Procédé selon la revendication 10, dans lequel la pression de résine est contrôlée, en utilisant un dispositif de co-extrusion, pendant l'étape de co-extrusion, dans lequel la pression de résine est appliquée à un filtre du dispositif de co-extrusion ; et la pression de résine est contrôlée de sorte que l'indice de fluidité à chaud de la couche d'étanchéité entière soit contrôlé pour être de 8,5 g/10 min à 14,0 g/10 min.
